# EUROPEAN PATENT APPLICATION

(11) **EP 1 168 138 A2**
(43) Date of publication of application: **02.01.2002**
(21) Application number: 01114528.1
(22) Date of filing: 16.06.2001
(51) Int. Cl.: G06F 1/00

(54) **System and method for producing log files for secured transactions**

(30) Priority: 30.06.2000 US 608225
(71) Applicant: Chrysalis- ITS Inc., Ottawa, Ontario K2G 6P9 (CA)
(72) Inventor: Couillard, Bruno, Gatineau, Quebec J8T 7Y6 (CA)
(74) Representative: Lempert, Jost, Dipl.-Phys. Dr. rer.nat.

(57) **Abstract**

A system and method for supporting logging of transaction data is disclosed. According to the method, a transaction is requested of an application. The application secures the transaction to provide verifiable data that the transaction is completed. In order to secure the transaction, data is provided to a security token. The token then requests transaction authorisation from other systems by transmitting a challenge to each other system. The other systems then respond to the challenge to authorise or prevent the transaction from being processed. Since each other system is provided with transaction data within the challenge, the other computers are capable of logging each transaction that they authorise.

## Description

### Field of the Invention

The present invention relates to computer security and more importantly to a method of producing log files for secured transactions.

### Background of the Invention

Computer security is fast becoming an important issue. With the proliferation of computers and computer networks into all aspects of business and daily life - financial, medical, education, government, and communications - the concern over secure information storage is growing. One common problem in computer security is electronic transaction verification. For example, if one were to transfer funds electronically, how is a secure record of the transaction that is later verifiable produced. Even more problematic is how to prevent unauthorised transactions form occurring.

In the past, there has been a lot of attention focused on securing transactions and a level of security achieved. For example, 40 bit encryption has been replaced with 128 bit encryption and now 1024 bit encryption is becoming the norm. This ever increasing security level shows more robustness against brute force attacks, but is little more secure against man-in-the-middle attacks or system breaches. There is a pressing need to provide enhanced security against possible attacks on secure transaction verification systems.

A man-in-the-middle attack is a security breach formed when a system or application disposes itself between two parties to a security communication. A man-in-the-middle may perform a listening breach of security wherein they merely listen to the data as it passes back and forth or may perform data replacement by imitating one of the parties, for example. Both of these attack types are problematic.

System breaches are security breaches where access to a system is provided. For example, a user logging onto a secure system without actually having access privileges is a system breach. A more common form of system breach is typified by the computer virus. A small application or applet is somehow introduced into a secure system and executes thereon. The application or applet, once executing can access data or alter data as a local application and is thus subject to different security levels than remote applications. For example, a locally executing application may alter security data such as encryption keys, which will compromise security.

In order to prevent locally executing data from affecting key data, one prior art method is to provide a token for performing cryptographic functions. The token does not accept programming code and, as such, cannot be tampered with. The token provides no access to keys stored therein to maintain security. Unfortunately, the man-in-the-middle attack is still possible wherein data is intercepted before being provided to the token and modified.

It would be advantageous to provide a method of reducing the efficacy of a man-in-the-middle security attack.

### Summary of the Invention

In accordance with the invention there is provided a method of supporting logging of secure transactions comprising the steps of:
a) providing data from a first processor to a security token for being secured;
b) determining challenge data using the security token, the challenge determined from the provided data and different for different provided data;
c) providing the challenge data to a guard system other than the first processor;
d) determining response data to the challenge data using the guard system;
e) transmitting the response data to the security token; and,
f) when the response data is the expected response data, securing the provided data and providing the secured provided data to the first processor.

The method allows for a plurality guard systems to each log transactions as they are occurring before they are complete. As such, guards can detect possibly problematic transactions and further analyse them, pass them on for further analysis, or require human authorisation to proceed.

Preferably, each guard system includes non-volatile storage for logging challenge requests as they occur. Further preferably, each guard is a trusted computer system.

Typically, the challenge data includes data relating to the transaction sufficient for analysis and challenge response determination. The response is indicative of the transaction data and an authorisation or non-authorisation of the transaction.

According to another aspect of the invention there is provided a system for supporting logging of secure transactions comprising: a first processor for providing data; a second processor for receiving the provided data and for determining challenge data from the provided data, the challenge data different for different provided data, and for securing the received data when the a response to the challenge data authorising securing of the data is received; and a third processor for receiving the challenge data, for determining response data to the challenge data, and for transmitting the response data to the second processor.

Preferably, the third processor includes a storage medium for logging some of the challenge data to form a transaction log.

Optionally, the guard system includes a user interface for prompting a user thereof to respond to challenge data when indicators of illicit transaction purpose are detected.

### Brief Description of the Drawings

The invention will now be described with reference to the drawings in which:
Fig. 1 is a simplified block diagram of a computer network;
Fig. 2 is a simplified block diagram of the first computer and its interfaces;
Fig. 3 is a simplified block diagram of the first computer and its interfaces having a Trojan-horse application in execution thereon;
Fig. 4 is a simplified flow diagram of a method according to the invention;
Fig. 5 is a simplified flow diagram of a method of improving transaction security and supporting logging of transaction;
Fig. 6 is a simplified flow diagram of a method of improving transaction security and supporting logging of transaction using a hierarchical guard structure having at least two levels of guards;
Figs. 7a-7c are simplified block diagrams of application and communication configurations for the communications used in supporting transaction logging; and,
Fig. 8 us a simplified block diagram of a system implementing the present invention but having a man-in-the-middle- type of Trojan-horse application in execution on the computer processing the transaction.

### Detailed Description of the Invention

Man-in-the-middle attacks are effective against many systems because they are difficult to detect. Further, once detected it is often difficult to assess the extent of the damage. If a simple and elegant solution to logging transactions existed, it would help identify, prevent and assess damage relating to security attacks

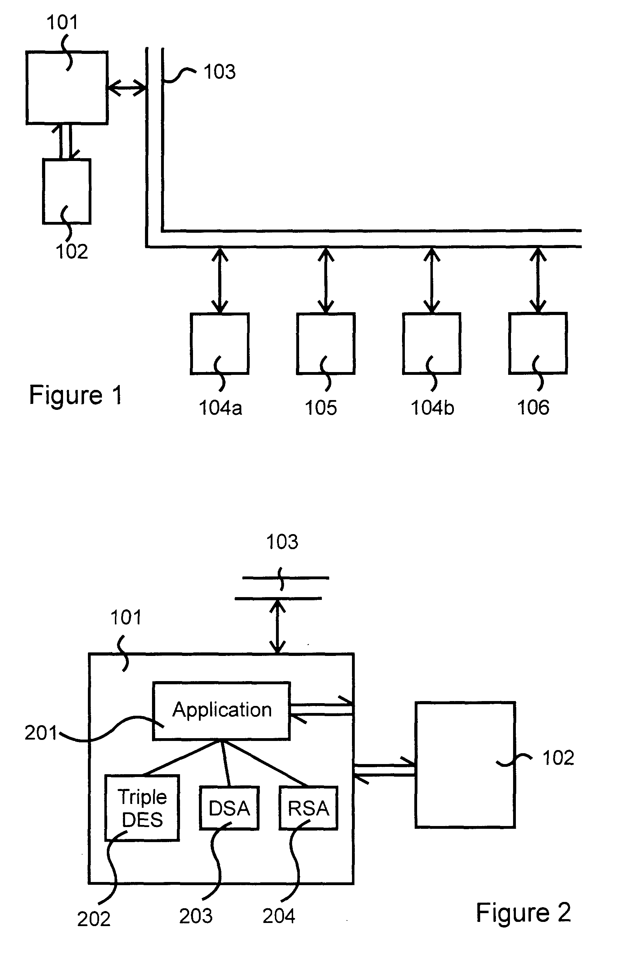

Referring to Fig. 1, a simplified block diagram of a computer network is shown. A first computer 101 is in communication with a security token 102. The security token 102 is for performing cryptographic functions with cryptographic keys stored within the token. A basic cryptographic function will now be described with reference to the first computer 101 and the token 102. When a file on the first computer 101 is to be encrypted or signed, the data is provided from the first computer 101 to the token 102 along with an identifier indicative of a key for use in the encryption process. The data is encrypted within the token 102 and the encrypted data is returned to the first computer 101. Preferably, the token 102 encrypts streaming data and, as such, data is received, processed and returned from the token 102 without requiring a substantial buffer in the token.

As shown, the first computer 101 is in communication with a network 103. The network is typically a public network such as the Internet. On the network are trusted systems and other systems. A trusted system is a system that is believed to be trustworthy and secure. For example, in Figure 1 a second office of company A is shown to have trusted computers 104a and 104b. Untrusted computers 105 and 106 are also on the network.

Referring to Fig. 2, a simplified block diagram of the first computer 101 and its interfaces is shown. The first computer 101 is in communication with the communication network 103 and a token 102. Within the first computer 101 is a processor in execution of an application 201. The application serves a function that requires some encryption functionality. For example, the application may relate to clearing financial transactions electronically and therefore require some digital signing. The application 201 is shown to have triple DES 201, RSA 202, and DSA 203 functionality. Other encryption functionality may also be present. Of course, a computer may support fewer or different security functionality than that described. Presently when an application 201 has data requiring signature, the data is provided to the token 102 along with a key identifier and a function identifier. On the token 102, the data is processed to provide signed data. The signed data is then returned to the application 201 where it is stored as a record and/or transmitted to an appropriate destination to enable processing.

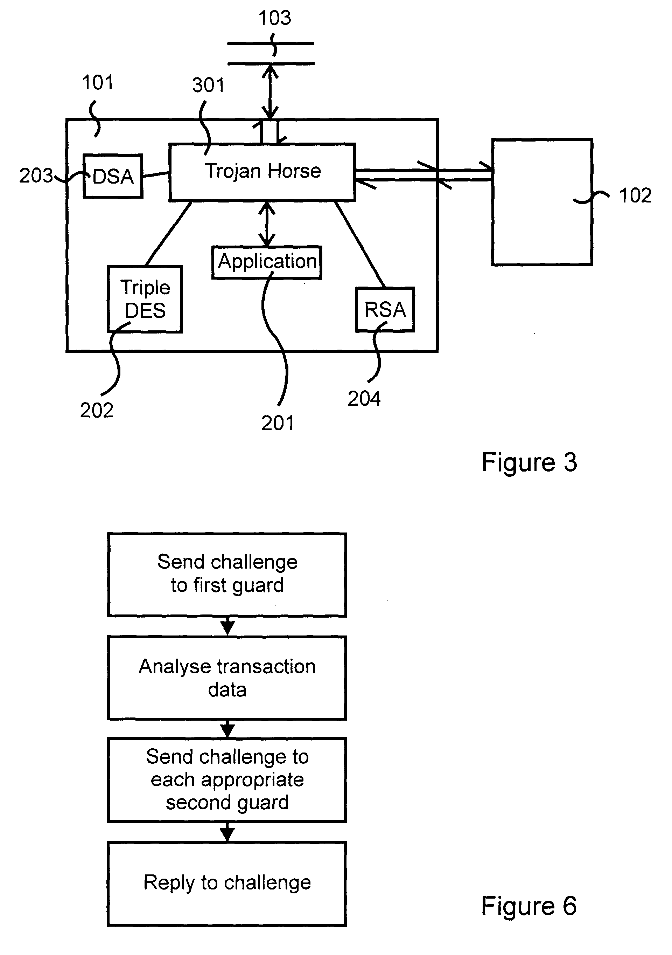

Because the signing key is stored within the token 102, the signing process is secure. Thus since the signing key is never transmitted form the token 102 and is used in a secure fashion within the token 102, it is not available to any users and as such is considered secure. Further, anything signed with that key is known to have been signed by the token 102 since that is an only repository of the key. Unfortunately, the application 201 on the first computer 101 is not equally secure. Referring to Fig. 3, a Trojan horse 301 - an application that is inserted on the first computer by an unauthorised individual - could intercept the data provided to the token and replace that data with different data. For example, a Trojan horse may intercept each fund transfer and replace the recipient account with another account number. Here, the application 201 does not know of the Trojan horse 301 or of the modifications performed by the Trojan horse 301. The resulting processing of transactions results in much money deposited into the specified account instead of elsewhere. Further, it would be difficult to trace what monies were misappropriated since a computer such as the first computer likely receives transaction requests from many different locations and companies.

If the application 201 includes processes to detect an accuracy of the signed data and so forth, it can be preempted by a Trojan horse 301 and the data received by and sent from the first computer 101 can be intercepted and processed only through the Trojan horse 301. In such a situation, the Trojan horse is invisible to the application 201, which appears to merely have a low volume of transactions. For example, the Trojan horse 301 may intercept one in ten transactions or only those transactions from particular parties.

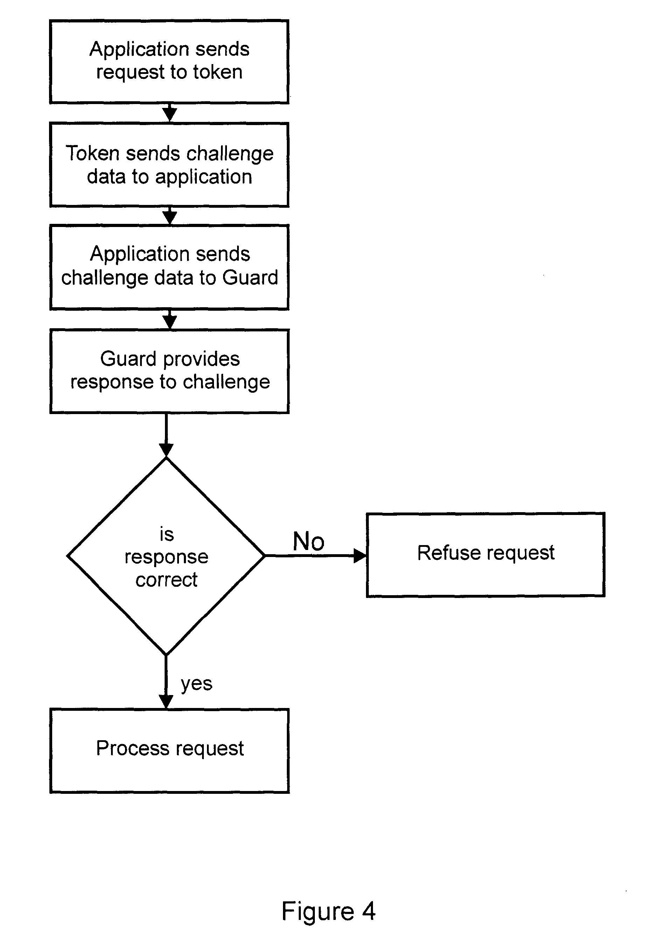

Referring to Fig. 4, a simplified flow diagram of a method according to the invention is shown. According to the method, an electronic transaction is transmitted to the first computer 101 including data and a request for signature. The first computer 101 provides the data to a token 102 associated with the first computer 101. The token 102 determines a challenge from the data, the challenge being different for different data. For example, a challenge may include the requestor, a monetary amount, and a time. The challenge is provided to the first computer 101 for transmission to other trusted computers 104a and 104b. Each trusted computer 104a, 104b provides a reply relating to the challenge. The first computer 101 provides the challenge results to the token 102 where they are analysed to determine that the signing process is likely authorised. When the process is authorised the data is signed within the token 102 and signed data is provided to the first computer 101.

Typically, a challenge includes digest data in the form of:
*f* (data, random_number, key_ID, usage)
where *f* is a function, data is the data for signature, random_number is an apparently random or near random number, key_ID is a value relating to the indicated key, and usage is a value relating to the use of the security algorithm, the signed data or both.

The challenge is transmitted to a guard computer. The reply is then a function of the challenge. Preferably, the reply is unique to a specific guard computer. This is easily achieved by signing the reply. The invention is described with reference to using trusted computers as guard computers; this need not be the case and in some instances, untrusted computers are used as guards. Preferably, at least some guards are implemented on trusted computers.

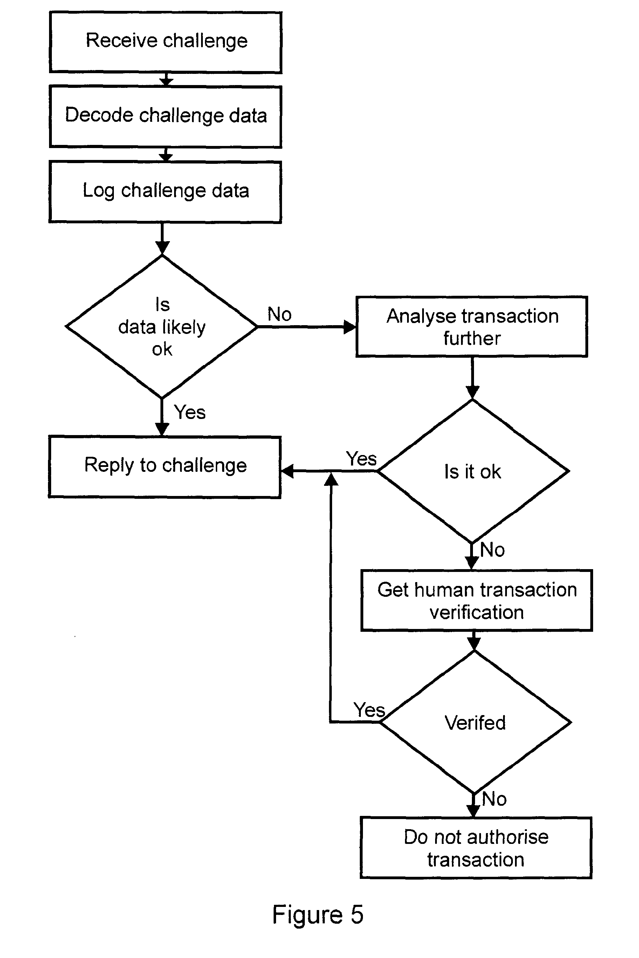

Because the token 102 requires responses to its challenge prior to performing digital signing with a particular encryption key, it now possible to monitor and log transactions. Referring to Fig. 5, a flow diagram of a process for execution on a guard computer system including the steps of logging a transaction is shown. A guard receives a challenge. It decodes challenge data within the challenge and logs the transaction data. Typically, this data is sufficient for maintaining a log of all transactions. The data is then filtered to identify those transactions that are not problematic. For identified transactions, a challenge response is formed and transmitted to the challenging system - from which the challenge is received. When the transaction is problematic, it is analysed further. Typically, upon further analysis, a transaction is authorised and the challenge response is transmitted. When this is not so, the challenge is provided to an operator in the form of a person to verify the transaction manually. For example, untypically large transactions or large numbers of transactions to a same account or a same account holder may be flagged and may require a person to verify that no fraud is occurring. Alternatively, these transactions are refused without human intervention by the guard system. When refused, either no challenge reply is provided or a negative challenge reply is provided. Preferably, a negative challenge reply is provided so the challenging system is assured of receiving responses from each guard system.

A log helps to accurately identify transactions that have occurred so the Trojan horse is no longer invisible when it is done. Also, the use of guards allows for enhanced security. This is achieved in two fashions. First, a number of systems must be breached in order to hide any unauthorised actions from activity logs. Secondly, the guard computers can be set to identify "unlikely" transactions and pass those on to either human operators or systems having better security resources for performing guarding functions. Alternatively, some guards may analyse the log data for some anomalies while others analyse the log for other anomalies. Thus security is increased. By providing guards with different functionality, it is also possible to serially chain the guard process wherein a guard determines further guards for approving a transaction and responds with a challenge reply indicative of the further guards and so forth. Since challenge replies are signed by the guards, the replies cannot be falsified easily. Thus, the use of serial guards allows for each guard to perform a type of verification to analyse how many further or what type of further analysis is required.

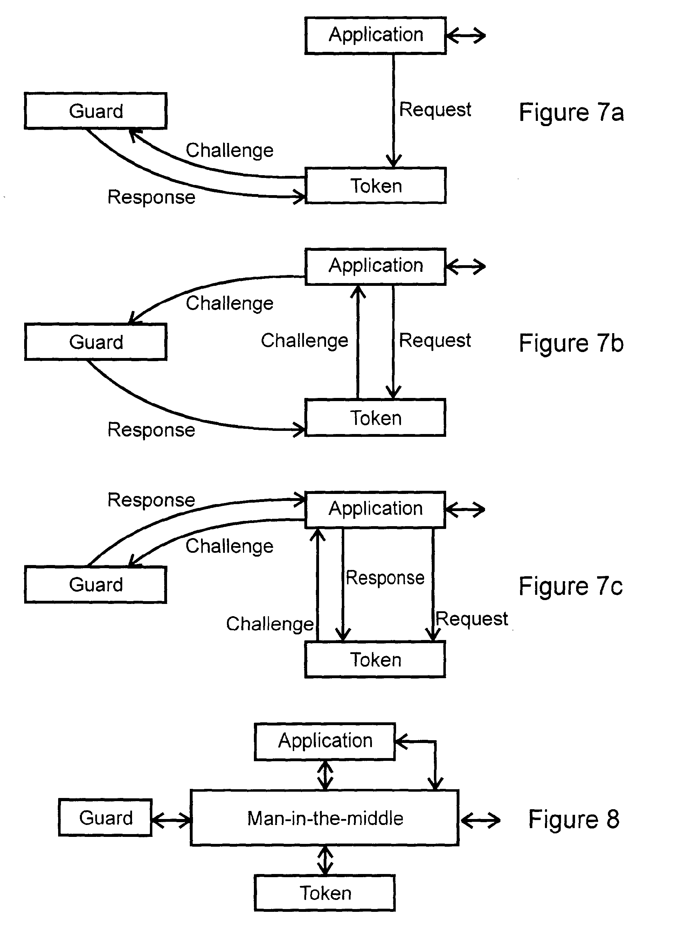

Referring to Fig. 6 a simplified flow diagram of one serially implemented guard is shown. The guard receives a challenge. The transaction data is analysed to determine an amount category related to the transaction size, a transferor category relating to the originator of funds, a transferee category related to the destination of the funds, a transfer profile, and a miscellaneous category. For each category, there is one or more further guards to which the challenge is to be sent. Thus, for example, a transferee may be suspected of fraud so the transaction may go to a security guard wherein each transaction is verified by hand. At a same time, the transferor may be suspected of money laundering and the challenge may also be directed toward a guard analysing transactions for laundering activities. Finally, the transaction is also analysed to determine any other loggable anomaly or known security breach such as a Trojan horse. For these, the challenge is passed onto further guards. Each guard logs transactions and analyses them further to determine transaction authorisation. Alternatively, some guards merely log transactions.

External monitoring of transactions is now supported by logging each transaction in one or more remote locations and analysing data for anomalies and providing those anomalies or indications thereof to a human operator for analysis and verification.

According to another embodiment of the invention, the challenge is sent to one or more guards at random. This reduces overall network traffic at a cost of security. OF course, since a man in the middle is unaware of the selected guard, it provides some reasonable level of security for many applications without the added communication overhead. Of course the serial guard implementation provides a similar advantage at a cost of additional processing by intermediate guards.

Referring to Figs. 7a-7c, a plurality of system configurations for use with the present invention are shown. In Fig. 7a, an application provides a request for securing of data to a token. The data relates to a transaction and the securing operation is provided in a secure fashion to the application. Before securing the data, the token transmits directly to a guard a challenge. Preferably, this is effected through device drivers on the system on which the application is executing. Alternatively, the token has a direct link to a network for outgoing challenges and to receive challenge replies. When a correct set of challenge replies is received, the data is secured and is returned to the application for processing.

In Fig. 7b, the application requests signing of data provided to the token. The token provides a challenge to the application, which is then distributed to appropriate guards that reply directly to the token. As such, the application is apprised of challenges and selected guards. In Fig. 7c a system is shown wherein the application is disposed between the token and the guard. Of course, it is well known to secure data to prevent tampering and as such, it is preferred that the data provided through the application is secured in a manner such that the application cannot tamper with the data.

Referring to Fig. 8, a man in the middle application is shown inserted between an application, a token and a guard. Here a security breach has occurred. Data requests from the application are intercepted and the requests are modified prior to being provided to the token. For example, the destination account may be modified. The toke receives what appears to be a valid request and begins to process it. It determines a challenge. The challenge is provided to the man in the middle, which then provides it to the guards as necessary and so forth. The transaction is completed since proper challenge responses will be received unless the transaction is flagged by a guard. The application would, however, note that the transaction it requested has failed. Thus an alarm can be initiated.

In a similar configuration, however, the man-in-the-middle can add new transactions on top of those of the application and thus process transactions undetected. That said, once detected, a complete log will exist within the guards to allow for reversal of fund transfers, damage assessment, legal prosecution, and so forth. As such, the present invention is highly advantageous.

Numerous other embodiments may be envisaged without departing from the spirit or scope of the invention.

## Claims

1. A method of supporting logging of secure transactions comprising the steps of:
a) providing data from a first processor to a second processor for being secured;
b) determining challenge data using the second processor, the challenge determined from the provided data and different for different provided data;
c) providing the challenge data to a third processor other than the first processor;
d) determining response data to the challenge data using the third processor;
e) transmitting the response data to the second processor; and,
f) when the response data is the expected response data, securing the provided data and providing the secured provided data to the first processor.

2. A method of supporting logging of secure transactions as defined in claim 1 wherein the challenge data comprises data indicative of some of the provided data and comprising the step of: analysing the challenge data to determine if the challenge data is indicative of a potentially illicit transaction.

3. A method of supporting logging of secure transactions as defined in claim 2 comprising the steps of:
(c2) when the challenge data is indicative of a potentially illicit transaction, providing the challenge to a further processor;
(d2) determining further response data to the challenge data using the further processor; and,
(e2) transmitting the further response data to the second processor.

4. A method of supporting logging of secure transactions as defined in claim 3, wherein the further processor is selected from a plurality of processors based on the potentially illicit purpose detected.

5. A method of supporting logging of secure transactions as defined in claim 4, wherein the response data is indicative of provision of the challenge to a further processor.

6. A method of supporting logging of secure transactions as defined in claim 3, comprising the step of logging some of the challenge data to form a log of challenges received from a first processor.

7. A method of supporting logging of secure transactions as defined in claim 2, comprising the steps of:
(c2) when the challenge data is indicative of a potentially illicit transaction, providing the challenge data to a reviewer for manually determining the response.

8. A method of supporting logging of secure transactions as defined in one of claims 1 to 7, wherein the challenge data and the response data are secured to prevent undetectable tampering with the challenge data or the response data.

9. A method of supporting logging of secure transactions as defined in claim 8, wherein the challenge data comprises *f*(data, random_number, key_ID, usage), and wherein data relating to particulars of a transaction are available for analysis by the second processor.

10. A method of supporting logging of secure transactions as defined in one of claims 1 to 8, wherein the third processor forms part of a trusted guard system.

11. A method of supporting logging of secure transactions as defined in one of claims 1 to 9, wherein the second processor forms part of a secure token.

12. A method of supporting logging of secure transactions comprising the steps of:
a) providing data from a first processor to a second processor for being digitally signed;
b) determining challenge data from the provided data according to *f*(data, random_number, key_ID, usage) using the second processor;
c) providing the challenge data to a third trusted processor other than the first processor for logging;
d) logging data relating to the provided data and indicative of a transaction;
e) determining characteristics of the logged data based on the challenge;
f) determining response data to the challenge data based on the determined characteristics of the logged data using the third processor;
g) transmitting the response data to the second processor; and,
h) when the response data is indicative of an accurate log of the transaction, securing the provided data and providing the secured provided data to the first processor.

13. A system for supporting logging of secure transactions comprising:
a first processor for providing data;
a second processor for receiving the provided data and for determining challenge data from the provided data, the challenge data different for different provided data, and for securing the received data when the a response to the challenge data authorising securing of the data is received; and
a third processor for receiving the challenge data, for determining response data to the challenge data, and for transmitting the response data to the second processor.

14. A system for supporting logging of secure transactions as defined in claim 13, wherein the third processor comprises a storage medium for logging some of the challenge data to form a transaction log.

15. A system for supporting logging of secure transactions as defined in claim 13 or 14, wherein the third processor comprises a plurality of processors each associated with a different security process and each for analysing the challenge data to detect different indicators of illicit transaction purpose.
